(19) Europäisches Patentamt
European Patent Office
Office européen des brevets

(11) EP 2 981 575 B1

# (12) EUROPEAN PATENT SPECIFICATION

(45) Date of publication and mention of the grant of the patent:
**30.08.2017 Bulletin 2017/35**

(21) Application number: **14705031.4**

(22) Date of filing: **12.02.2014**

(51) Int Cl.:
***C08L 23/12*** $^{(2006.01)}$ ***F16L 9/12*** $^{(2006.01)}$

(86) International application number:
**PCT/EP2014/000388**

(87) International publication number:
**WO 2014/161621 (09.10.2014 Gazette 2014/41)**

## (54) HIGH STIFFNESS POLYPROPYLENE COMPOSITIONS

POLYPROPYLENZUSAMMENSETZUNGEN MIT HOHER STEIFIGKEIT

COMPOSITIONS DE POLYPROPYLÈNE À RIGIDITÉ ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2013 EP 13001743**

(43) Date of publication of application:
**10.02.2016 Bulletin 2016/06**

(73) Proprietor: **Borealis AG**
**1220 Vienna (AT)**

(72) Inventors:
- **HORILL, Thomas**
  **A-2201 Gerasdorf (AT)**
- **DOSHEV, Petar**
  **A-4040 LInz (AT)**
- **SUNDHOLM, Tua**
  **06100 Porvoo (FI)**
- **SANDHOLZER, Martina**
  **A-4030 Linz (AT)**
- **BERNREITNER, Klaus**
  **A-4010 Linz (AT)**

(74) Representative: **Kador & Partner**
**Corneliusstraße 15**
**80469 München (DE)**

(56) References cited:
**EP-A1- 1 724 303**
**EP-A1- 2 145 923**
**EP-A1- 2 191 955**
**WO-A1-99/24479**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 981 575 B1

## Description

### Introduction

The present invention relates to a heterophasic polypropylene composition comprising a propylene homo- or random copolymer matrix phase and an ethylene-propylene copolymer rubber phase dispersed within the matrix phase showing excellent processability and stiffness at good impact properties. The present invention further relates to a filled heterophasic polypropylene composition and to a process for producing the heterophasic polypropylene composition and the filled heterophasic polypropylene composition as well as the use of thereof for the production of articles.

### State of the art

Well-known polypropylenes of commerce are particularly isotactic, semicrystalline, thermoplastic polymer materials with excellent cost- to performance ratio. However, their brittleness under impact loading limits the utilisation.

A well known approach for improving the toughness of an isotactic polypropylene is the incorporation of ethylene-propylene copolymer as dispersed phase into the polypropylene matrix.

Commonly, infiltration boxes that are installed in the soil are exposed to impact before and during installation and thus need sufficient impact resistance to prevent damage to the article during transportation, handling and installation. At the same time, such infiltration boxes need to withstand the high pressure of the soil once installed and thus need sufficient stiffness and high creep resistance not to be deformed and collapse under the soil load. Moreover, infiltration boxes are most easily produced by injection moulding of a polymer requiring a good processability. Thus, an appropriate polymer for the production of infiltration boxes includes a good stiffness/impact balance at good injection moulding processability, i.e. melt flow rates.

For instance, EP 1 619 217 A1 provides a heterophasic propylene polymer with good results as to softness and toughness, even though the toughness at low temperature could be still improved. Moreover the polymer, which however is appreciated under commercial aspects limiting industrial applicability.

EP 2 072 576 A1 relates to a polypropylene as well as its use. An increase in low temperature toughness was achieved by reactive modification with at least bifunctionally unsaturated compounds.

Soft heterophasic polypropylene copolymers with low tensile modulus and high comonomer content are prepared in EP 0 991 719. Heterophasic polypropylene copolymers with a tensile modulus between 200 and 340 MPa are obtained. However, the heterophasic polypropylene copolymers exhibit inferior impact properties.

WO 2011/117103 A1 discloses a heterophasic polypropylene copolymer with a broad molecular weight and a dispersed ethylene-propylene rubber phase exhibiting a high intrinsic viscosity. Such a composition shows a good stiffness/impact balance. However, the processability concerning injection moulding is limited due to low melt flow rate. WO 99/24479 discloses propylene polymers which can be used for the production of articles like pipes or tubes. Considering the above disadvantages it is an object of the present invention to overcome the above disadvantages and to provide a polypropylene resin that shows a high processability in regard of injection moulding together with excellent stiffness/impact balance.

### Objective of the present invention

The present invention is based on the finding that the balance of properties is improved when a propylene homo- or random copolymer as a matrix phase is combined with a dispersed phase comprising an ethylene-propylene copolymer rubber, whereby the heterophasic polypropylene composition has a content of monomer units derived from ethylene of 2.0 to 7.0 wt.-%.

### Summary of the present invention

Hence, the present invention provides
a heterophasic polypropylene composition comprising
a propylene homo- or random copolymer matrix phase (A), and
an ethylene-propylene copolymer rubber phase (B) dispersed within the matrix phase,
the heterophasic polypropylene composition including
a fraction soluble in p-xylene at 25°C (XCS fraction) which is present in the resin in an amount of 4 to 14 wt.-%, and
a fraction insoluble in p-xylene at 25 °C (XCU fraction) which is present in the resin in an amount of 86 to 96 wt.-%,
wherein the heterophasic polypropylene composition has an $MFR_2$, determined according to ISO 1133 at 230 °C and under a load of 2.16 kg, of 4.0 to 8.0 g/10 min; and
wherein the heterophasic polypropylene composition has a flexural modulus higher than 1500 MPa measured on an

injection moulded specimen with the dimension 80x10x4 $mm^3$ according to ISO 178; and wherein the heterophasic polypropylene composition has a content of monomer units derived from ethylene of 2.0 to 7.0 wt.-%.

It has been surprisingly found that such heterophasic polypropylene compositions show an improved balance of processability, stiffness and constant impact properties within a certain range of temperatures.

In the following, the disclosure refers to the substances and phases as parts of the present invention as:

- A propylene homo- or random copolymer matrix phase (A)
- An ethylene-propylene copolymer rubber phase (B)
- An inorganic filler (C)
- Modifiers (D)
- Additives (E)
- Nucleating agent(s) (F)

**Definitions**

The term "heterophasic polypropylene composition" used herein denotes a heterophasic composition well known in the art including a crystalline matrix and a rubber phase dispersed therein.

The fraction soluble in p-xylene (XCS fraction) denotes the fraction of the heterophasic polypropylene composition that is soluble in p-xylene at 25 °C representing for the most part amorphous ethylene-propylene copolymer.

The fraction insoluble in p-xylene at 25 °C (XCU fraction) is meant to be the fraction of the heterophasic polypropylene composition that is not soluble in p-xylene at 25 °C representing for the most part the propylene homo or random copolymer matrix phase.

A mineral filler denotes a filler of natural origin which is at least partially crystalline.

An inorganic filler denotes a filler not containing organic compounds.

A polymerisation stage denotes a single polymerisation reactor or a sequential arrangement of polymerisation reactors realizing a product with defined properties.

A reaction step or polymerisation step denotes a single polymerisation process in exactly one polymerisation reactor.

**Heterophasic polypropylene composition**

a) $MFR_2$

The heterophasic polypropylene composition according to the present invention has a melt flow rate $MFR_2$ (2.16 kg, 230 °C) of 4.0 to 8.0 g/10 min, more preferably of 4.0 to 7.0 g/10 min, even more preferably of 4.0 to 6.5 g/10 min and most preferably of 4.0 to 6.0 g/10 min, determined according to ISO 1133.

b) Comonomer content

Further, the heterophasic polypropylene composition according to the present invention has a content of monomer units derived from ethylene, butene, pentene, hexene and/or octene of 2.0 to 7.0 wt.-%, preferably 2.0 to 7.0 wt.-%, more preferably of 3.0 to 6.5 wt.-%, and most preferably of 4.0 to 5.5 wt.-%. The content of monomer units derived from ethylene, butene, pentene, hexene and/or octene also can be denoted $C_2$-content, $C_4$-content, $C_5$-content, $C_6$-content or $C_8$-content respectively. The preferred comonomer is ethylene.

c) XCS fraction

The fraction soluble in p-xylene at 25 °C (XCS) is present in the heterophasic polypropylene composition in an amount of 4 to 14 wt.-%, preferably of 8 to 13 wt.-%, and more preferably of 10 to 12 wt.-%.

d) XCU fraction

The heterophasic polypropylene composition according to the invention preferably includes a XCU fraction in

an amount of 86 to 96 wt.-%, more preferably 87 to 92 wt.-%, and most preferably 88 to 90 wt.-%.

e) Crystallization temperature $T_C$

The heterophasic polypropylene composition according to the present invention preferably has a crystallization temperature, $T_C$, of 118 to 135 °C, more preferably 128 to 132 °C, an most preferably 129 to 131 °C measured according to ISO 11357-1, -2 and -3. The crystallization temperature $T_C$ is mainly dependent on the polymer structure and insofar can be (*inter alia*) influenced by use of nucleating agents. For example, when a nucleating agent such as described in EP 1 028 985, Example 1, is used, the $T_C$ can be increased significantly.

f) Heat of melting $H_M$

The heterophasic polypropylene composition according to the present invention preferably has a heat of melting, $H_M$, of 85 to 125 J/g, more preferably of 90 to 120 J/g, and most preferably of 95 to 116 J/g measured by differential scanning calorimetry (DSC) according to ISO 11357-1, -2, and -3.

g) Heat of crystallization $H_C$

The heterophasic polypropylene composition according to the present invention preferably has a heat of crystallization, $H_C$, of 80 to 120 J/g, more preferably of 85 to 115 J/g, and most preferably of 90 to 111 J/g measured by differential scanning calorimetry (DSC) according to ISO 11357-1, -2, and -3.

h) Charpy Notched Impact Strength at 23 °C

Furthermore, the heterophasic polypropylene composition according to the invention preferably has a Charpy Notched Impact Strength (NIS) at 23 °C of above 5.5 J/m$^2$, preferably of above 6.0 J/m$^2$, and most preferably of above 7.0 J/m$^2$ measured accordingly to ISO 179-1eA:2000. Usually, the Charpy Notch Impact Strength (NIS) at 23 °C of the invention will not be higher than 14, frequently not higher than 12 J/m$^2$.

i) Polydispersity index PI

The heterophasic polypropylene composition according to the present invention preferably has a polydispersity index, *PI,* measured at 200°C of 2.5 to 6.0 Pa$^{-1}$, more preferably of 2.8 to 5.0 Pa$^{-1}$, and most preferably of 3.0 to 4.2 Pa$^{-1}$.

j) Flexural modulus

The heterophasic polypropylene composition according to the invention has a flexural modulus of higher than 1500 MPa, preferably of higher than 1625 MPa, more preferably of higher than 1650 MPa and most preferably of higher than 1700 MPa, determined according to ISO 178.

k) Modifier (D) content

The heterophasic polypropylene composition according to the present invention preferably has optionally a modifier content (D) in amount of below 10 wt.-%, more preferably below 7 wt.-%, and most preferably below 5 wt.-% with respect to the total weight of the heterophasic polypropylene composition.

l) Additive (E) content

The heterophasic polypropylene composition according to the present invention preferably has an additive content (E) in an amount of below 1.0 wt.-%, more preferably in an amount of 0.1 to 0.8 wt.-%, and most preferably in an amount of 0.2 to 0.7 wt.-% with respect to the total weight of the heterophasic polypropylene composition.

m) Nucleating agents (F) content

The heterophasic polypropylene composition according to the present invention optionally has a content of nucleating agent(s) (F) of 50 ppm to 1.5 wt.-%, preferably of 100 ppm to 1.3 wt.-%, and most preferably of 0.1 to 1.2 wt.-% with respect to the total weight of the heterophasic polypropylene composition.

n) Amount of additives (E) and nucleating agents (F)

The heterophasic polypropylene composition according to the present invention preferably has a sum of the contents of nucleation agent(s) (F) and additive(s) (E) of 0.1 to 2.3 wt.-%, preferably of 0.5 to 2.1 wt.-%, and most preferably of 0.3 to 1.9 wt.-% with respect to the total weight of the heterophasic polypropylene composition.

**XCS phase**

a) Comonomer content

It is preferred that the fraction soluble in p-xylene at 25 °C (XCS) has a $C_2$-content of 25 to 55 wt.-%, more preferably of 30 to 50 wt.-%, and most preferably of 35 to 45 wt.-%.

b) Intrinsic viscosity

The XCS phase preferably has an intrinsic viscosity of 3.5 to 6.0 dl/g, more preferably of 4.0 to 5.8 dl/g, and most preferably of 4.4 to 5.5 dl/g measured in decalin at 135 °C according to DIN EN ISO 1628-1 and -3.

**Filled heterophasic polypropylene composition**

a) Mineral, inorganic filler (C) content

The present invention is further concerned with a filled heterophasic polypropylene composition consisting of the polypropylene composition as described herein and a mineral, inorganic filler (C) in an amount of 5 to 55 wt.-%, preferably 15 to 45 wt.-%, and more preferably 20 to 40 wt.-% with respect to the total weight of the filled heterophasic polypropylene composition.

b) Charpy Notched Impact Strength at 23 °C

Furthermore, the filled heterophasic polypropylene composition according to the invention preferably has a Charpy Notched Impact Strength (NIS) at 23 °C of above 2.5 J/$m^2$, preferably of above 3.0 J/$m^2$, and most preferably of above 3.5 J/$m^2$ measured accordingly to ISO 179-1eA:2000. Usually, the Charpy Notch Impact Strength (NIS) at 23 °C of the invention will not be higher than 14, frequently not higher than 12 J/$m^2$. The addition of talc as a filler in comparison to the composition with talc as a nucleating agent only leads to a reduction in impact properties.

c) Flexural modulus

The filled heterophasic polypropylene composition according to present invention preferably has a flexural modulus of higher than 2500 MPa, more preferably 2700 MPa and most preferably 2900 MPa determined according to ISO 178.

**Matrix phase (A)**

In a first embodiment the matrix phase (A) consists of at least one propylene random copolymer. When the matrix phase consists of two or more propylene random copolymers differing as to their molecular weight, the matrix will be bimodal or even multimodal.

In a second embodiment the matrix phase (A) consists of at least one propylene homopolymer. When the matrix phase consists of two or more propylene homopolymers differing as to their molecular weight, the matrix will be bimodal or even multimodal.

In a third embodiment the matrix phase (A) consists of a mixture of at least one propylene homopolymer with at least one propylene random copolymer. Again a bimodal or multimodal matrix can result.

**Ethylene-propylene rubber phase (B)**

The ethylene-propylene copolymer rubber phase (B) may consist of a single compound, but may also comprise a mixture of different compounds. This also applies for all preferred embodiments of component (B).

**Mineral, inorganic filler (C)**

The mineral, inorganic filler (C) is preferably selected from the group of talc, calcium carbonate, mica, kaolin, clay, and/or barium sulphate. The preferred filler is talc.

More preferably talc used for the production of the composition has an aspect ratio of 1:1 to 100:1, even more preferably talc with an aspect ratio of 1:1 to 50:1, and most preferably talc with an aspect ratio of 1:1 to 25:1.

Talc has a nucleating effect on polypropylene, and it should be understood that talc can be used as both a nucleating agent (F) or an inorganic filler (C). As a matter of definition, added talc up to an amount of 1.5 wt.-% always has a nucleating effect on the final composition, whereas additional amounts of talc fulfil the function of a filler. Therefore, the addition of talc will always have a nucleating effect.

Modifiers (D) may be included during the polymerisation process or after the polymerisation by melt mixing.

**Modifiers (D)**

Suitable modifiers include other thermoplastics like polyethylene homo- or copolymers, poly-1-butene, poly-4-methylpentene-1 and/or thermoplastic elastomers like ethylene-propylene rubber, styrene elastomers, or polypropylene impact copolymers.

It should further be mentioned that the use of modifiers (D), particularly ethylene-propylene or ethylene-butene ,or preferably ethylene-octene impact modifiers will contribute to the fraction soluble in p-xylene (XCS fraction) and may form a mixture with the ethylene propylene copolymer rubber material.

The at least one modifier is preferably a polymeric compound, more preferably an impact modifier, even more preferably an ethylene-propylene, ethylene-butene or ethylene-octene impact modifier, and most preferably a ethylene-octene impact modifier.

**Additives (E)**

Additives (E) may be included during the polymerisation process or after the polymerisation by melt mixing.

Suitable additives include stabilizers such as UV-stabilisers, hindered amine stabilisers (HALS), process stabilisers such as phosphites, long term stabilisers such as thiosynergists and phenolic antioxidants, alkyl radical scavengers, lubricants, processing aids, pigments and foaming agents.

**Nucleating agents (F)**

Nucleating agent(s) (F) may optionally be included during the polymerisation process or after the polymerisation by melt mixing.

Suitable nucleating agents include alpha nucleating agents like talc, sodium benzoates, vinyl cycloalkane polymer, e.g. vinyl cyclohexane (VCH) polymer, vinyl cyclopentane polymer and vinyl-2-methyl cyclohexane polymer. The preferred nucleating agents are talc and vinylcyclohexane, even more preferred the combination of talc and vinylcyclohexane, in small amount of 50 ppm to 1.5 wt.-%, more preferably of 100 ppm to 1.3 wt.-%, even more preferably of 1000 ppm to 1.2 wt.-% with respect to the total weight of the heterophasic polypropylene composition.

**Process**

The present invention is further concerned with a process for the provision of heterophasic polypropylene composition as described above. The present invention insofar provides
a process for producing the heterophasic polypropylene composition
in the presence of a Ziegler-Natta catalytic system modified with vinylcyclohexane comprising a cocatalyst, wherein the process comprises

a) production of a first material in a first polymerisation stage (I), having an $MFR_2$ (2.16 kg, 230 °C) of 0.5 to 8g/10min, further having a XCS content of 0.5 to 2 wt.-%,
wherein the first polymerisation stage (I) comprises a slurry reactor and the process is run at a temperature of 70 to 95 °C and a pressure of 50 to 60 barg;
b) transferring said first material in a second polymerisation stage (II);
c) further producing a second material,
wherein the second polymerisation stage (II) comprises a gas phase reactor and the process is run at a temperature of 80 to 95 °C and a pressure of 20 to 35 barg;
d) transferring the mixture of said first and second materials having a $MFR_2$ of 6 to 8 g/10 min in a third polymerisation

stage (III),

wherein the third polymerisation stage (III) comprises a gas phase reactor and the process is run at a temperature of 60 to 90 °C and a pressure of 14 to 22 barg;

e) compounding the reaction product of the third polymerisation stage (III) with additive(s), optionally nucleating agent(s), optionally modifier(s) and/or optionally mineral inorganic filler(s).

a) Catalytic system

The catalyst for producing the heterophasic polypropylene composition according to the present invention usually is a Ziegler-Natta catalyst. Such Ziegler Natta catalysts are described in EP 1 632 529, EP 0 491 566 A1, EP 0 591 224 A1, and particularly EP 1 028 985 and comprise a catalyst component, a cocatalyst component, and an external donor, whereby the catalyst component of the catalyst system primarily contains magnesium, titanium, halogen and an internal donor.

The catalyst preferably contains a transition metal compound as a procatalyst component. The transition metal compound is selected from the group of titanium compounds having an oxidation degree of 3 or 4, vanadium compounds, zirconium compounds, chromium compounds, cobalt compounds, nickel compounds, tungsten compounds and rare earthmetal compounds, titanium trichloride and titanium tetrachloride being particularly preferred. Examples of suitable catalyst systems are described in, for example, Finnish Patents Nos.86866, 96615 and 88047 and 88048.

These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 92/19653, WO 92/19658

One particularly preferable catalyst, which can be used in the present invention, is disclosed in FI Patent No. 88047 (WO 92/119653). Another preferred catalyst is disclosed in Finnish Patent Application No. 963707.

Preferably the catalyst for producing the unmodified heterophasic propylene polymer composition is a catalyst modified by a vinyl compound of the formula (I) as a nucleating agent. A catalyst modified by a vinyl compound of the formula (I) is a catalyst obtainable by mixing a vinyl compound of the formula (I) with the catalytic components.

$$CH_2{=}CH{-}CHR^1R^2 \qquad (I)$$

Even more preferably, said nucleating agent is selected from: vinyl cycloalkane polymer, preferably vinyl cyclohexane (VCH) polymer, vinyl cyclopentane polymer and vinyl-2-methyl cyclohexane polymer. The most preferred nucleating agent is vinyl cyclohexane (VCH) polymer.

More preferably the catalyst for producing the heterophasic propylene polymer composition according to the present invention is polymerised with a vinyl compound of the formula (I) as described above, preferably with vinyl cyclohexane (VCH) polymer.

Further preferably, the weight ratio of the polymer of the vinyl compound of the formula (I) as defined above, preferably of the vinyl cyclohexyl (VCH) polymer, to solid catalyst component after the modification step is up to 5 (5:1), preferably up to 3 (3:1) most preferably is from 0.8 (1:2) to 2 (2:1). In other words a polyvinyl cyclohexyl (pVCH) modified solid Ziegler-Natta catalyst system is applied.

It is thereby preferred that the vinyl compound of formula (I) as described above is incorporated to the matrix phase (A) by polymerizing the propylene matrix phase (A) in the presence of a modified catalyst system, wherein the modification means the polymerisation of a vinyl compound of formula (I) as defined above, more preferably of vinyl cyclohexane (VCH), in the presence of said catalyst. The modification is preferably effected by polymerising a vinyl compound of the formula (I) as defined above, preferably with vinyl cyclohexane (VCH) in the presence of the solid Ziegler Natta catalyst component.

A catalyst system useful in the present process can be prepared by reacting a magnesium halide compound with a titanium compound and an internal donor.

The magnesium halide compound is, for example, selected from the group of magnesium chloride, a complex of magnesium chloride with a lower alkanol and other derivatives of magnesium chloride. $MgCl_2$ can be used as such or it can be combined with silica, e.g. by absorbing the silica with a solution or slurry containing $MgCl_2$. The lower alkanol used can be preferably methanol or ethanol, particularly ethanol.

The titanium compound used in the preparation of the procatalyst is preferably an organic or inorganic titanium compound, having an oxidation state of titanium of 3 or 4. Also other transition metal compounds, such as vanadium, zirconium, chromium, molybdenum and tungsten compounds can be mixed with the titanium compound. The titanium compound usually is halide or oxyhalide, an organic metal halide, or a purely metal organic compound, in which only organic ligands have been attached to the transition metal. Particularly preferable are the titanium halides, especially $TiCl_4$. Preferably the titanation is for producing propylene homo- or copolymers.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of catalysts with suitable compounds are shown e.g. in WO 92/19659, WO 92/19653, WO 92/19658, US 4 347 160, US 4 382 019, US 4 435 550, US 4 465 782, US 4 473 660, US 4 530 912 and US 4 560 671.

The cocatalyst used in combination with the transition metal compound typically comprises an aluminium alkyl compound. The aluminium alkyl compound is preferably trialkyl aluminium such as trimethylaluminium, triethylaluminium, tri-isobutylaluminium or tri-n-octylaluminium, most preferably triethylaluminium . However, it may also be an alkylaluminium halide, such as diethylaluminium chloride, dimethylaluminium chloride and ethylaluminium sesquichloride.

The external donor of the preferred catalyst may be silanes, e.g. dicyclopentyldimethoxysilane (DCPDMS), cyclohexylmethyldimethoxysilane (CHMDMS), diethylaminotriethoxysilane or dicyclopentyldimethoxysilane.

The ratio of the cocatalyst/donor (mol/mol) is preferably 8.0 to 10.0, more preferably 8.5 to 9.5.

Preferably, the heterophasic polymer composition is prepared in a sequential polymerisation process. The term "sequential polymerisation process" shall indicate that the heterophasic polymer composition is produced in at least two, particularly three reactors connected in series.

Sequential polymerisation process such as developed by *Borealis A/S*, Denmark (known as *BORSTAR®* technology) are well known in the art and described in patent literature, such as in EP 0 887 379, WO 92/12182, WO98/58975 WO 2004/000899, WO 2004/111095, WO 99/24478, WO 99/24479 or in WO 00/68315. A further particularly suitable sequential polymerisation process is the *Spheripol®* process of *Basell.*

In the process of the present invention, the catalyst system used may be varied between stages but is preferably the same for all stages. Thus, no additional catalyst is introduced into the second and third polymerisation stage (II) and (III).

Preferably the heterophasic polyolefin composition according to the present invention is obtained by a multistage polymerisation process, as described above, in the presence of a catalyst system comprising as one component a Ziegler-Natta procatalyst, which contains a transesterification product of a lower alcohol and a phthalic ester.

The procatalyst used according to the invention is preferably prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (II)

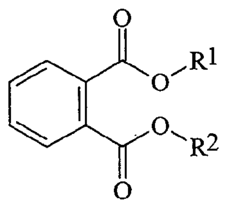

(II)

wherein R1' and R2' are independently at least a $C_5$ alkyl
under conditions where a transesterification between said $C_1$ to $C_2$ alcohol and said dialkylphthalate of formula (II) takes place to form the internal donor

c) washing the product of stage b) or

d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

Preferably the procatalyst used according to the invention contains not more than 2.5 wt.-% of titanium. Its donor content is preferably between 5 to 15 wt.-%

A further component of the catalysts system used is an external donor represented by formula (IIIa) or (IIIb). Formula (IIIa) is defined by

$$Si(OCH_3)_2(R^3)_2 \qquad \text{(IIIa)}$$

wherein $R^3$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^3$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)3(NR_xR_y) \qquad (IIIb)$$

wherein $R_x$ and Ry can be the same or different a represent a hydrocarbon group having 1 to 12 carbon atoms.

$R_x$ and Ry are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R_x$ and Ry are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R_x$ and Ry are the same, yet more preferably both $R_x$ and Ry are an ethyl group.

More preferably the external donor of formula (IIIb) is diethylaminotriethoxysilane.

Most preferably the external donor is of formula (IIIa), like dicyclopentyl dimethoxy silane $[Si(OCH_3)_2(cyclopentyl)_2]$ or diisopropyl dimethoxy silane $[Si(OCH_3)_2(CH(CH_3)_2)_2]$.

The present invention also pertains to a heterophasic polypropylene composition obtainable according to the process as described herein (above and in the following).

b) General process

The present invention further relates to a process for producing the heterophasic polypropylene according to the invention, wherein the propylene homo or random copolymer matrix phase (A) is prepared first and the ethylene-propylene copolymer rubber phase (B) is prepared second in the presence of the first product. The heterophasic polypropylene composition is prepared third in the presence of the first and second product. The resulting powder optionally will be compounded under conventional conditions.

It is preferred that the propylene homo or random copolymer matrix (A) is produced in one or more polymerisation stages comprising slurry or gas phase reactors or a combination thereof and is afterwards transferred to at least one subsequent polymerisation stage comprising at least one gas phase reactor in which the ethylene-propylene rubber phase (B) is produced in the presence of component (A).

In other words, the process can comprise a slurry reactor and two gas phase reactors in a series (slurry/gpr/gpr), or two slurry reactors and one gas phase reactor in a series (slurry/slurry/gpr).

The slurry reactor(s) preferably is/are loop reactor(s). Thus, the reactor configurations preferably are loop/gpr/gpr or loop/loop/gpr configurations.

c) Prepolymerisation and general options

Optionally, the first polymerisation stage includes a pre-polymerisation step in a manner known in the field which precedes the steps of the first polymerisation stage (a). A pre-polymerisation step as a matter of definition shall be part of the first polymerisation stage. Usually the prepolymerization will not take place in the reactor used for producing the first material but usually will take place in a reactor preceding the reactor used for producing the first material.

In a first embodiment the reaction conditions are as follows:

The first polymerisation stage (I) is preferably carried out in a slurry reactor at a temperature of 70 to 95 °C and a pressure of 50 to 60 barg. The second polymerisation (II) stage preferably is carried out in a gas phase reactor at a temperature of 80 to 95 °C and a pressure of 20 to 35 barg. The third polymerisation stage (III) preferably is carried out in a gas phase reactor at a temperature of 60 to 90 °C and a pressure of 14 to 22 barg.

In a second embodiment the reaction conditions are as follows:

The first polymerisation stage (I) is preferably carried out in a slurry reactor at a temperature of 60 to 85 °C and a pressure of 30 to 40 barg. The second polymerisation stage (II) is preferably carried out in a slurry reactor at a temperature of 60 to 85 °C and a pressure of 30 to 40 barg. The third polymerisation stage (III) is preferably carried out in a gas phase reactor at a temperature of 60 to 90 °C and a pressure of 7 to 15 barg.

For both embodiments the pre-polymerisation may be carried out in the reactor used for producing the first material at different temperatures and pressures or the pre-polymerisation may be carried out in a separate reactor preceding the reactor used for producing the first material.

The process according to the present invention is preferably a continuous process.

d) First embodiment

Preferably, in the process for producing the heterophasic propylene copolymer in a sequence of a first polymerisation stage (I) comprising a slurry (loop) and second and third polymerisation stages (II) and (III) each comprising a gas phase reactor as defined above the conditions for the first polymerisation stage (I) may be as follows:

- the temperature is within the range of 45 °C to 115 °C, preferably between 65 °C and 105 °C, most preferably 60 to 90 °C,
- the pressure is within the range of 20 barg to 80 barg, preferably between 40 barg to 70 barg, most preferably between 50 to 60 barg,
- hydrogen is added for controlling the molar mass in a manner known per se, more preferably the $H_2/C_3$ ratio is in the range of 0.7 to 4.5 mol/kmol, more preferably 2.0 to 3.0 mol/kmol.

Subsequently, the reaction mixture from the first polymerisation stage (I) is transferred to the second polymerisation stage (II).

Preferably the split is adapted such that 35 to 65 wt.-%, more preferably 40 to 60 wt.-% and most preferably 45 to 55 wt.-% of the composition produced in the first and second reaction stage (together) is produced in the first reaction stage (I).

The conditions in stage (II) when carried out in a gas phase reactor are preferably as follows:

- the temperature is within the range of 60 °C to 140 °C, preferably between 70 °C and 110 °C, and most preferably between 80 to 95°C,
- the pressure is within the range of 5 barg to 50 barg, preferably between 15 barg to 35 barg, and most preferably between 20 to 35 barg,
- hydrogen can be added for controlling the molar mass in a manner known per se, more preferably the $H_2/C_3$ ratio is in the range of 25 to 110 mol/kmol, more preferably 25 to 60 mol/kmol.

Still subsequently, the reaction mixture from the second polymerisation stage (II) is transferred to the third polymerisation stage (III).

The conditions in stage (III) when carried out in a gas phase reactor are preferably as follows:

- the temperature is within the range of 40 °C to 100 °C, preferably between 55 °C and 75 °C, most preferably between 60 and 90 °C,
- the pressure is within the range of 2 barg to 50 barg, preferably between 5 barg to 25 barg, most preferably between 14 to 22 barg,
- hydrogen is added for controlling the molar mass in a manner known per se. More preferably the $H_2/C_3$ ratio is in the range of 40 to 85 mol/kmol,
- the $C_2/C_3$ feed ratio is preferably in the range of 650 to 1000 mol/kmol, more preferably 680 to 780 mol/kmol.

Preferably 4.0 to 18.0 wt.-%, more preferably 5.0 to 15.0 wt.-% and most preferably 5.0 to 14.5 wt.-% of the final composition (i.e. all stages) is produced in the third reaction stage.

e) Second embodiment

In the second embodiment in the process for producing the heterophasic propylene copolymer according to the present invention using a sequence of a first and second polymerisation stage carried out in a loop reactor and a third polymerisation stage carried out in a gas phase reactor as described above, the preferred conditions are as follows:

in the first polymerisation stage (I):

- the temperature is within the range of 45 °C to 115 °C, preferably between 65 °C and 105 °C, most preferably 60 to 85 °C,
- the pressure is within the range of 10 barg to 70 barg, preferably between 20 barg to 60 barg, most preferably between 30 to 40 barg,
- hydrogen can be added for controlling the molar mass in a manner known per se. Preferably hydrogen is used to adapt the $MFR_2$ (of the intermediate resulting from this stage) to a range of 0.8 to 8.0 g/10min.

Subsequently, the reaction mixture from the first polymerisation stage (I) is transferred to the second polymerisation stage (II) being again carried out in a loop reactor. The split is preferably adapted to the identical ranges as disclosed for the first embodiments. Reference is made to the aforesaid.

The conditions in stage (II) are preferably as follows:

- the temperature is within the range of 35 °C to 140 °C, preferably between 55 °C and 110 °C, and most preferably between 60 to 85 °C,
- the pressure is within the range of 10 barg to 70 barg, preferably between 20 barg to 60 barg, and most preferably between 30 to 40 barg,
- hydrogen can be added for controlling the molar mass in a manner known per se. Preferably hydrogen is used to adapt the $MFR_2$ (of the intermediate resulting from this stage) to a range of 6.0 to 9.0 g/10min.

Still subsequently, the reaction mixture from the second polymerisation stage (II) is transferred to the third polymerisation stage (III) carried out in a gas phase reactor.

The conditions in stage (III) are preferably as follows:

- the temperature is within the range of 40 °C to 100 °C, preferably between 55 °C and 95 °C, most preferably between 60 and 90 °C,
- the pressure is within the range of 2 barg to 50 barg, preferably between 5 barg to 25 barg, most preferably between 7 to 15 barg,
- hydrogen can be added for controlling the molar mass in a manner known per se. Preferably hydrogen is used to adapt the $MFR_2$ of the final polymer to a range of 4.0 to 8.0 g/10min, more preferably of 4.0 to 7.0 g/10 min, even more preferably of 4.0 to 6.5 g/10 min and most preferably of 4.0 to 6.0 g/10 min.
- the $C_2/C_3$ (mol/kmol) feed ratio is preferably in the range of 650 to 1000, more preferably 680 to 780.

Preferably 4.0 to 18.0 wt.-%, more preferably 5.0 to 15.0 wt.-% and most preferably 5.0 to 14.5 wt.-% of the final composition (i.e. all stages) is produced in the third reaction stage (III).

The residence time can vary in the polymerisation stages. The residence time in the polymerisation stage carried out in a slurry reactor, preferably a loop reactor typically is in the range 0.5 to 5 hours and mostly 30 to 40 min. The residence time in the reaction stage carried out in the gas phase reactor will generally be 1 min to 8 hours. The residence times required will depend on the catalyst system and can be figured out by persons skilled in the art via routine experimentation.

In a further embodiment, the matrix (A) and the ethylene-propylene copolymer rubber component (B) can be polymerised separately and compounded by melt-mixing. However, this embodiment is not preferred.

Preferably, the heterophasic polypropylene composition is produced according to any of the above embodiments of the process. Thus, the heterophasic polypropylene composition of the present invention preferably is an in-situ blend.

f) Compounding

The composition is preferably produced in a process comprising a compounding step, wherein the powder obtained from the third reaction stage (III) is extruded in an extruder and then pelletized to polymer pellets in a manner know in the art. Additive(s), filler(s), nucleating agent(s) and/or modifier(s) may be added during this extrusion stage, or in a separate compounding step.

The present invention further relates to an article comprising more preferably consisting of the heterophasic

polypropylene composition or the filled heterophasic polypropylene composition according to the present invention.

In one embodiment, the article preferably is a moulded article, preferably an injection moulded or blow moulded article.

In another preferred embodiment, the article preferably is a part of a rain water management system, such as an infiltration system or a stormwater reservoir.

In another preferred embodiment, the article is an injection moulded pipe, fitting or manhole.

In another preferred embodiment, the article is an extruded pipe.

Furthermore, the present invention also pertains to infiltration boxes comprising and preferably consisting of the heterophasic polypropylene composition or the filled heterophasic polypropylene composition according to the present invention.

Still further, the present invention relates to the use of the heterophasic polypropylene composition according to the invention for producing articles, more preferably articles as listed above.

In the following, the present invention is described by way of examples.

## Examples:

### 1. Methods

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Xylene Soluble Fraction

The xylene soluble fraction (XCS) as defined and described in the present invention is determined as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XCS\% = (100 \times m_1 \times v_0)/(m_0 \times v_1) \qquad (1)$$

wherein $m_0$ designates the initial polymer amount (grams), $m_1$ defines the weight of residue (grams), $v_0$ defines the initial volume (milliliter) and $v_1$ defines the volume of the analysed sample (millititer). The fraction insoluble in p-xylene at 25 °C (XCU) is then equal to 100% - XCS%.

c) Intrinsic Viscosity

The intrinsic viscosity (IV) value increases with the molecular weight of a polymer. The intrinsic viscosity of the XCU and the XCS fraction is measured in decalin at 135 °C according to DIN EN ISO 1628-1 and -3.

d) Melting and crystallisation temperature

The melting and crystallisation temperature $T_m$ and $T_C$ are determined according to ISO 11357-1, -2 and -3 with a *TA-Instruments 2920 Dual-Cell* with RSC refrigeration apparatus and data station. A heating and cooling rate of 10 °C/min is applied in a heat / cool / heat cycle between +23 and +210 °C, the crystallisation temperature $T_C$ being determined in the cooling step and the $T_m$ melting temperature being determined in the second heating step.

e) Melting and crystallisation heat

The heat of melting and heat of crystallisation $H_M$ and $H_C$ are determined by differential scanning calorimetry (DSC) according to ISO 11357-1, -2, and -3 with a *TA-Instruments 2920 Dual-Cell* with RSC refrigeration apparatus and data station.

f) Comonomer content

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}C$-NMR spectroscopy was undertaken in the conventional manner well documented in the literature.

The amount of comonomer (N) was determined as weight percent (wt.-%) via:

$$N = k_1 (A / R) + k_2 \qquad (2)$$

wherein A is the maximum absorbance defined of the comonomer band, R the maximum absorbance defined as peak height of the reference peak and with $k_1$ and $k_2$ the linear constants obtained by calibration. The band used for ethylene content quantification is selected depending if the ethylene content is random (730 $cm^{-1}$) or block-like (720 $cm^{-1}$). The absorbance at 4324 $cm^{-1}$ was used as a reference band.

g) Charpy Notched Impact Strength (NIS)

Charpy impact strength was determined according to ISO 179-1eA:2000 on V-notched samples of 80x10x4 $mm^3$ at 23 °C (Charpy impact strength (23 °C)) and -20 °C (Charpy impact strength (-20 °C)).

The test specimens were prepared by injection moulding using an *IM V 60 TECH* machinery in line with ISO 1872-2. The melting temperature was 200 °C and the moulding temperature was 40 °C.

h) Tensile Modulus

Mechanical properties were determined according to ISO 527-2. Injection moulded specimens of type 1A were used, which were prepared according to ISO 1872-2.

Tensile modulus (in MPa) was determined according to ISO 527-2. The measurement was conducted at 23 °C temperature with an elongation rate of 1 mm/min.

i) Flexural Modulus

The flexural modulus was determined according to ISO 178 at a test speed of 2 mm/min and a force of 100 N, whereby the length of the span between the supports was 64 mm, on test specimens having a dimension of 80x10x4 $mm^3$ (length x width x thickness) prepared by injection moulding according to EN ISO 1873-2.

j) Average aspect ratio of filler

The average aspect ratio has been determined by recording transmission electron microscopy (TEM) images of the pure inorganic filler prepared onto film-coated TEM grids from an aqueous suspension by rotating the sample in 1° intervals from -75° to +75°, e.g. with *JEOL JEM-2100* microscope, and reconstructing the three dimensional structure (e.g. with the *JEOL TEMography*™ software). 100 particles were measured and the average calculated. The aspect ratio of a particle is the ratio of the longest and shortest particle radii that pass through the geometric centre of the particle.

In case of anisotropy in one dimension (fiber-like) or two dimensions (platelet-like) structures the geometric centre equals the centre of gravity of the particle.

k) Rheological parameters

The characterisation of polymer melts by dynamic shear measurements complies with ISO standards 6721-1 and 6721-10. The measurements were performed on an *Anton Paar MCR501* stress controlled rotational rheometer, equipped with a 25 mm parallel plate geometry. Measurements were undertaken on compression moulded plates, using nitrogen atmosphere and setting a strain within the linear viscoelastic regime. The plates were prepared by compression moulding at 200°C with a holding time of 60 seconds

The oscillatory shear tests were done at 200 °C applying a frequency range between 0.01 and 600 rad/s and setting a gap of 1.3 mm. In a dynamic shear experiment the probe is subjected to a homogeneous deformation at a sinusoidal varying shear strain or shear stress (strain and stress controlled mode, respectively). On a controlled strain

experiment, the probe is subjected to a sinusoidal strain that can be expressed by

$$\gamma(t) = \gamma_0 \sin(\omega t) \quad (3)$$

If the applied strain is within the linear viscoelastic regime, the resulting sinusoidal stress response can be given by

$$\sigma(t) = \sigma_0 \sin(\omega t + \delta) \quad (4)$$

where $\sigma_0$ and $\gamma_0$ are the stress and strain amplitudes, respectively; $\omega$ is the angular frequency; $\delta$ is the phase shift (loss angle between applied strain and stress response); *t* is the time.

Dynamic test results are typically expressed by means of several different rheological functions, namely the shear storage modulus G', the shear loss modulus, G", the complex shear modulus, G*, the complex shear viscosity, η*, the dynamic shear viscosity, η' and the out-of-phase component of the complex shear viscosity n" which can be expressed as follows:

$$G' = \frac{\sigma_0}{\gamma_0}\cos\delta \text{ [Pa]} \quad (5)$$

$$G' = \frac{\sigma_0}{\gamma_0}\sin\delta \text{ [Pa]} \quad (6)$$

$$G^* = G' + iG'' \text{ [Pa]} \quad (7)$$

$$\eta^* = \eta' - i\eta'' \text{ [Pa.s]} \quad (8)$$

$$\eta' = \frac{G''}{\omega'} \text{ [Pa.s]} \quad (9)$$

$$\eta'' = \frac{G'}{\omega} \text{ [Pa.s]} \quad (10)$$

The values of storage modulus (G'), loss modulus (G"), complex modulus (G*) and complex viscosity (η*) were obtained as a function of frequency (ω)). Thereby, e.g. $\eta^*_{300\ rad/s}$ ($eta^*_{300\ rad/s}$) is used as abbreviation for the complex viscosity at the frequency of 300 rad/s and $\eta^*_{0.05\ rad/s}$ ($eta^*_{0.05\ rad/s}$) is used as abbreviation for the complex viscosity at the frequency of 0.05 rad/s.

The loss factor tangent tan or tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

The polydispersity index, *PI,* is defined by equation 11.

$$PI = \frac{10^5}{G'(\omega_{COP})}, \quad \omega_{COP} = \omega \; for \; (G' = G'') \quad (11)$$

where, $\omega_{COP}$ is the cross-over angular frequency, determined as the angular frequency for which the storage modulus, G' equals the loss modulus, G".

The values are determined by means of a single point interpolation procedure, as defined by *Rheoplus* software.

In situations for which a given G* value is not experimentally reached, the value is determined by means of an extrapolation, using the same procedure as before. In both cases (interpolation or extrapolation), the option from *Rheoplus* "*-Interpolate y-values to x-values from parameter"* and the *"logarithmic interpolation type"* were applied.

References (incorporated by reference herewith):

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995).

[3] Definition of terms relating to the non-ultimate mechanical properties of polymers, Pure & Appl. Chem., Vol. 70, No. 3, pp. 701-754, 1998.

**2. Compositions:**

a) Comparative Examples (CE2-4):

Comparative Example CE2 is the commercially available product *BD950MO* (*Borealis Polyolefine GmbH,* Austria) being a heterophasic copolymer with an MFR2 of 7.0 g/10min, an XCS content of 13 wt.-%

Comparative example CE3 commercially available product *BC250MO* (*Borealis Polyolefine GmbH,* Austria) being a heterophasic copolymer with an MFR2 of 4 g/10min, an XCS content of 21 wt.-%

Comparative example CE4 has been prepared according to Example Ref 4 of EP 1 724 303 A1 being a heterophasic copolymer with an MFR2 of 0.3 g/10min, an XCS content of 14 wt.-%.

b) Inventive Examples (IE1-9) and Comparative Example (CE1):

The catalyst used for the Inventive Examples IE1-IE9 is a high yield $MgCl_2$ supported Ziegler-Natta catalyst has been prepared according to Example 1 of EP 1 028 985. A prepolymer was produced using this catalyst at a temperature of 30°C and a pressure of 55 barg. The polymerisation was continued in a loop reactor. The second and the third polymerisation stage was performed in a gas phase reactor.

The powder was further melt homogenised and pelletized using a *Coperion ZSK57* co-rotating twin screw extruder with screw diameter 57 mm and *L*/*D* 22. Screw speed was 200 rpm and barrel temperature 200-220 °C.

In IE1-9 and CE1, the following additives were added during the melt homogenisation step:

9000 ppm talc (*TALC HM2* supplied by Imifabi S.P.A), 2200 ppm *ADK STAB AO-60* (supplied by *Adeka Corporation),* 1900 ppm *Songnox DSTPD* (supplied by *Songwon*), 1600 ppm *ADK-STAB 2112 RG* (supplied by *Adeka Corporation)* and calcium stearate 400 ppm (*CEASIT-AV*/*T,* supplied by *Baerlocher*).

In IE7a, the following additives were added during the melt homogenisation step:

2200 ppm *ADK STAB AO-60* (supplied by *Adeka Corporation),* 1900 ppm *Songnox DSTPD* (supplied by *Songwon*), 1600 ppm *ADK-STAB 2112 RG* (supplied by *Adeka Corporation)* and calcium stearate 400 ppm (*CEASIT-AV*/*T,* supplied by *Baerlocher*).

c) IE10

IE 10 was produced by adding 20% talc (*TALC HM2* supplied by *Imifabi S.P.A.*) to the polymer powder. In the same compounding step 2200 ppm *ADK STAB AO-60* (supplied by *Adeka Corporation),* 1600 ppm *ADK-STAB 2112 RG* (supplied by *Adeka Corporation)* and calcium stearate 400 ppm (*CEASIT-AV*/*T,* supplied by *Baerlocher*) were added. Compounding was done on a *Prism TSE 24* twin screw compounder with screw diameter of 24 mm and *L*/*D of 40* under standard conditions.

Table 1: Properties and process data of Inventive and Comparative Examples.

| | | Value | Unit | IE1 | IE2 | IE3 | IE4 | IE5 | IE6 | IE7* | IE7a | IE8 | IE9 | IE10 | CE1 | CE2 | CE3 | CE4 |
|---|---|---|---|---|---|---|---|---|---|---|---|---|---|---|---|---|---|---|
| Stage I | Proc | *T* | [°C] | 85 | 85 | 85 | 85 | 85 | 85 | 85 | 85 | 85 | 85 | 85 | 85 | | | |
| | | *P* | [barg] | 55 | 55 | 55 | 55 | 55 | 55 | 55 | 55 | 55 | 55 | 55 | 55 | | | |
| | | $H_2/C_3$ | [mol/kmol] | 4.32 | 2.54 | 2.55 | 2.53 | 2.59 | 2.54 | 0.82 | 0.82 | 2.57 | 4.31 | 2.57 | 0.12 | | | |
| | A | $MFR_2$ | [g/10 min] | 7.5 | 3.8 | 3.8 | 3.6 | 4.2 | 4.3 | 0.9 | 0.9 | 4.0 | 7.4 | 4,2 | ND | | | |
| | | XCS | [wt.-%] | 1.5 | 2.1 | 2.1 | 1.7 | 1.1 | 1.7 | 1.6 | 1,6 | 1.6 | 1.6 | 1.8 | 2.7 | | | |
| Stage II | Proc. | *T* | [°C] | 90 | 90 | 90 | 90 | 90 | 90 | 90 | 90 | 90 | 90 | 90 | 90 | | | |
| | | *P* | [barg] | 22 | 22 | 22 | 22 | 22 | 22 | 22 | 22 | 22 | 22 | 22 | 22 | | | |
| | | $H_2/C_3$ | [mol/kmol] | 27 | 52 | 53 | 51 | 54 | 40 | 103 | 103 | 45 | 28 | 52 | 11 | | | |
| | | *Split (I/II)* | [%] | 46:54 | 46:54 | 46:54 | 47:53 | 46:54 | 42:58 | 46:54 | 46:54 | 46:54 | 45:55 | 47:53 | 42:58 | | | |
| | B | $MFR_2$ | [g/10 min] | 7.5 | 7.5 | 7.5 | 7.5 | 7.7 | 7.6 | 6.8 | 6.8 | 7.8 | 7.0 | 8,1 | 0.32 | | | |
| | | XCS | [wt.-%] | 1.2 | 1.7 | 1.7 | 1.7 | 0.9 | 1.5 | 1.3 | 1.3 | 1.0 | 1.4 | 1.6 | 1.7 | | | |
| Stage III | Proc. | *T* | [°C] | 65 | 65 | 65 | 65 | 65 | 65 | 65 | 65 | 65 | 65 | 65 | 65 | | | |
| | | *P* | [barg] | 15 | 15 | 15 | 15 | 15 | 15 | 15 | 15 | 15 | 15 | 15 | 15 | | | |
| | | $H_2/C_3$ | [mol/kmol] | 46 | 52 | 55 | 55 | 39 | 80 | 56 | 56 | 50 | 44 | 55 | 46 | | | |
| | | $C_2/C_3$ | [mol/kmol] | 702 | 700 | 707 | 707 | 700 | 702 | 749 | 749 | 958 | 694 | 953 | 595 | | | |
| | | *Split (II/III)* | [%] | Has been adjusted to match an XCS amount as given below | | | | | | | | | | | | | | |
| | Final composition | $MFR_2$ | [g/10 min] | 4.7 | 4.7 | 5.4 | 4.8 | 5.2 | 5.1 | 5.3 | 4.8 | 5.0 | 4.0 | 6.9 | 0.24 | 7.0 | 4.0 | 0.3 |
| | | $C_2$ | [wt.-%] | 4.4 | 5.2 | 3.7 | 4.7 | 4.7 | 4.2 | 3.8 | 4.2 | 5.4 | 6.6 | 5,1 | 6.3 | 7.1 | 11.0 | 8.1 |
| | | XCS | [wt.-%] | 10 | 12 | 10 | 11 | 11 | 10 | 10 | 10 | 11 | 14 | 11 | 14 | 13 | 21 | 14 |
| | | IV/XCS | [dl/g] | 5.3 | 4.8 | 4.9 | 4.9 | 5.3 | 4.0 | 4.6 | 4.6 | 4.8 | 5.2 | 3,8 | 4.6 | 3.7 | 2.3 | 4.0 |
| | | $C_2$/XCS | [wt.-%] | 37 | 38 | 37 | 38 | 38 | 38 | 38 | 38 | 44 | 38 | 44 | 33 | 33 | 39 | 36 |
| | | $T_M$ | [°C] | 167 | 168 | 167 | 168 | 167 | 167 | 167 | 167 | 167 | 167 | | 167 | 163 | 165 | 164 |
| | | $H_M$ | [J/g] | 114 | 112 | 111 | 112 | 114 | 116 | 113 | 116 | 110 | 108 | | 104 | 95 | 79 | 88 |
| | | $T_C$ | [°C] | 130 | 130 | 130 | 130 | 130 | 130 | 130 | 130 | 130 | 130 | | 129 | 127 | 100 | 118 |
| | | $H_C$ | [J/g] | 109 | 106 | 108 | 107 | 109 | 111 | 109 | 111 | 108 | 105 | | 97 | 90 | 122 | 83 |
| | | *PI* (200°C) | [$Pa^{-1}$] | 3.1 | 3.1 | 3.2 | 3.2 | 3.1 | 3.2 | 4.0 | | 3.1 | 3.0 | 2 | 4.4 | | | 6.5 |
| | | NIS (23°C) | [$J/m^2$] | 7.5 | 8.6 | 6.8 | 7.7 | 7.5 | 6.5 | 6.3 | 6.2 | 7.0 | 10.0 | 3.6 | 92.0 | 7.3 | 43.6 | |
| | | NIS (-20°C) | [$J/m^2$] | 3.1 | 3.6 | 2.2 | 3.5 | 3.4 | 2.6 | 2.5 | 2.2 | 3.4 | 3.9 | 2.6 | 6.6 | 3.3 | 7.6 | 5.5 |
| | | Flex. Mod. | [MPa] | 1670 | 1636 | 1729 | 1660 | 1676 | 1707 | 1785 | 1636 | 1732 | 1526 | | 1599 | 1275 | 1090 | |
| | | Tens. Mod. | [MPa] | | | | | | | | | | | 2984 | | | | 1264 |
| | | Talc** | [wt.-%] | 0.9 | 0.9 | 0.9 | 0.9 | 0.9 | 0.9 | 0.9 | | 0.9 | 0.9 | 20 | 0.9 | ND | ND | ND |
| Rating | | Processability*** | (MFR) | ++ | ++ | ++ | ++ | ++ | ++ | ++ | ++ | ++ | + | | -- | ++ | + | |
| | | Stiffness**** | (NIS) | ++ | ++ | + | ++ | ++ | + | + | + | ++ | ++ | | ++ | ++ | ++ | |
| | | Impact***** | (Flex. M.) | + | + | ++ | + | + | ++ | ++ | + | ++ | o | | o | -- | -- | |
| | | Total | | ++ | ++ | ++ | ++ | ++ | ++ | ++ | + | ++ | + | | o | o | o | |

The properties of the inventive examples and the comparative example are compared in Table 3. It can be seen that the inventive examples show clear advantages both in flexural modulus, NIS and $MFR_2$.

*Examples IE7 and IE7a are the same compositions with the difference that IE7a does not include any talc.

**Talc in the amounts of below 1 wt.-% contributes to the nucleation.

***Processability is ranked ++, if the MFR value is above 4.5 g/10 min, +, if above 3.0 g/10 min, o, if above 2.5 g/10 min, -, if below 2.5 g/10 min, and --, if far below 2.5 g/10 min.

****Impact is ranked ++, if the NIS (23 °C) value is above 7.0 $J/m^2$, +, if above 6.0 $J/m^2$, o, if above 5.5 $J/m^2$, -, if below 5.5 $J/m^2$, and --, if far below 5.5 $J/m^2$.

*****Stiffness is ranked ++, if the flexural modulus value is above 1700 MPa, +, if above 1625 MPa, o, if above 1500 MPa, -, if below 1500 MPa, and --, if far below 1500 MPa.

ND: not determined

## Claims

1. Heterophasic polypropylene composition comprising
a propylene homo- or random copolymer matrix phase (A), and
an ethylene-propylene copolymer rubber phase (B) dispersed within the matrix phase,
the heterophasic polypropylene composition including
a fraction soluble in p-xylene at 25°C (XCS fraction) which is present in the resin in an amount of 4 to 14 wt.-%, and
a fraction insoluble in p-xylene at 25 °C (XCU fraction) which is present in the resin in an amount of 86 to 96 wt.-%,
wherein the heterophasic polypropylene composition has an $MFR_2$, determined according to ISO 1133 at 230 °C and under a load of 2.16 kg, of 4.0 to 8.0 g/10 min; and
wherein the heterophasic polypropylene composition has a flexural modulus higher than 1500 MPa measured on an injection moulded specimen with the dimension 80x10x4 $mm^3$ according to ISO 178; and
wherein the heterophasic polypropylene composition has a content of monomer units derived from ethylene of 2.0 to 7.0 wt.-%.

2. The heterophasic polypropylene composition according to the claim 1, wherein the composition optionally comprises 50 ppm to 1.5 wt.-%, more preferably 100 ppm to 1.3 wt.-%, and most preferably 0.1 to 1.2 wt.-% of an nucleating agent (F) with respect to the total weight of the heterophasic composition.

3. The heterophase polypropylene composition according to claim 2, wherein the nucleating agent (F) is talc and/or at least one vinyl cycloalkane polymer.

4. The heterophasic polypropylene composition according to any of the preceding claims, wherein the additives (E) content is below 1.0 wt.-%, preferably of 0.1 to 0.8 wt.-%, and most preferably of 0.2 to 0.7 wt.-% with respect to the total weight of the heterophasic composition.

5. The heterophasic polypropylene composition according to any of the preceding claims, wherein the XCS fraction has a content of monomer units derived from ethylene of 25 to 55, more preferably of 30 to 50, and most preferably of 35 to 45 wt.-%.

**6.** The heterophasic polypropylene composition according to any of the preceding claims wherein the XCS fraction has an intrinsic viscosity of 3.5 to 6.0, more preferably of 4.0 to 5.8, and most preferably of 4.4 to 5.5 dl/g measured in decalin at 135°C according to DIN EN ISO 1628-1 and -3.

**7.** The heterophasic polypropylene composition according to any of the preceding claims wherein the heterophasic polypropylene composition has a flexural modulus of higher than 1500 MPa, preferably higher than 1625 MPa, even more preferably higher than 1650 MPa, and most preferably of higher than 1700 MPa, determined according to ISO 178.

**8.** The heterophasic polypropylene composition according to any of the preceding claims, wherein the heterophasic polypropylene composition has a content of monomer units derived from ethylene of 3.0 to 6.5, and preferably of 4.0 to 5.5 wt.-%.

**9.** The heterophasic polypropylene composition according to any of the preceding claims wherein the heterophasic polypropylene composition has a heat of melting, $H_M$, of 85 to 125, preferably of 90 to 120, and more preferably of 95 to 116 J/g measured by differential scanning calorimetry (DSC) according to ISO 11357-1, -2, and -3.

**10.** The heterophasic polypropylene composition according to any of the preceding claims wherein the heterophasic polypropylene composition has a heat of crystallization, $H_C$, of 80 to 120, preferably of 85 to 115, and more preferably of 90 to 111 J/g measured by differential scanning calorimetry (DSC) according to ISO 11357-1, -2, and -3.

**11.** The heterophasic polypropylene composition according to any of the preceding claims wherein the heterophasic polypropylene composition has a crystallization temperature, $T_C$, of 118 to 135, preferably 128 to 132, and more preferably 129 to 131 °C measured according to ISO 11357-1, -2 and -3.

**12.** The heterophasic polypropylene composition according to any of the preceding claims wherein the heterophasic polypropylene composition has a polydispersity index, *PI,* measured at 200°C of 2.5 to 6.0, preferably of 2.8 to 5.0, and more preferably of 3.0 to 4.2 $Pa^{-1}$.

**13.** A filled heterophasic polypropylene composition consisting of the polypropylene composition according to any of claims 1 to 12 and a mineral, inorganic filler (C) in an amount of 5 to 55 wt.-%, preferably 15 to 45 wt.-%, and most preferably 20to 40 wt.-% with respect to the total weight of the filled heterophasic polypropylene composition.

**14.** The filled heterophasic polypropylene composition according to claim 13, wherein the mineral inorganic filler (C) is talc.

**15.** The filled heterophasic polypropylene composition according to claims 13 or 14, wherein the filled heterophasic polypropylene has a flexural modulus of higher than 2500 MPa, determined according to ISO 178.

**16.** A process for producing the heterophasic polypropylene composition according to any of the preceding claims in the presence of a Ziegler-Natta catalytic system modified with vinylcyclohexane comprising a cocatalyst, wherein the process comprises

a) production of a first material in a first polymerisation stage (I), having an $MFR_2$ (2.16 kg, 230 °C) of 0.5 to 8 g/10 min, further having a XCS content of 0.5 to 2 wt.-%,
wherein the first polymerisation stage (I) includes a slurry reactor and the process is run at a temperature of 70 to 95 °C and a pressure of 50 to 60 barg;
b. transferring said first material in a second polymerisation stage (II);
c. further producing a second material,
wherein the second polymerisation stage (II) includes a gas phase reactor and the process is run at a temperature of 80 to 95 °C and a pressure of 20 to 35 barg;
d. transferring the mixture of said first and second materials having a $MFR_2$ of 6 to 8 g/10 min in a third polymerisation stage (III),
wherein the third polymerisation stage (III) includes a gas phase reactor and the process is run at a temperature of 60 to 90 °C and a pressure of 14 to 22 barg;
e. optionally compounding the reaction product of the third polymerisation stage (III) with additive(s), optionally nucleating agent(s), optionally modifier(s) and/or optionally mineral inorganic filler(s).

**17.** Article comprising the heterophasic polypropylene composition according to any of claims 1 to 12 or the filled heterophasic polypropylene composition according to any of claims 13 to 15.

**18.** The article according to claim 17, whereby the article is an extruded or injection moulded pipe , a fitting, a manhole, or a part of a rain water management system.

**Patentansprüche**

**1.** Heterophasische Polypropylenzusammensetzung, umfassend eine Propylenhomo- oder randomcopolymermatrixphase (A), und
eine Ethylen-Propylen-Copolymerkautschukphase (B), die in der Matrixphase dispergiert ist,
wobei die heterophasische Polypropylenzusammensetzung das Folgende umfasst:

eine Fraktion, die in p-Xylol bei 25 °C löslich ist (XCS-Fraktion) und in dem Harz mit einer Menge von 4 bis 14 Gew.-% vorliegt, und
eine Fraktion, die in p-Xylol bei 25 °C unlöslich ist (XCU-Fraktion) und in dem Harz mit einer Menge von 86 bis 96 Gew.-% vorliegt,
wobei die heterophasische Polypropylenzusammensetzung einen $MFR_2$ von 4,0 bis 8,0 g/10 min aufweist, bestimmt gemäß ISO 1133 bei 230 °C und unter einer Last von 2,16 kg; und
wobei die heterophasische Polypropylenzusammensetzung einen Biegemodul von mehr als 1500 MPa aufweist, gemessen an einer spritzgegossenen Testprobe mit den Abmessungen $80x10x4mm^3$ gemäß ISO 178; und
wobei die heterophasische Polypropylenzusammensetzung einen Gehalt an Monomereinheiten, die sich von Ethylen ableiten, von 2,0 bis 7,0 Gew.-% aufweist.

**2.** Heterophasische Polypropylenzusammensetzung nach Anspruch 1, wobei die Zusammensetzung optional 50 ppm bis 1,5 Gew.-%, besonders vorzugsweise 100 ppm bis 1,3 Gew.-% und am meisten bevorzugt 0,1 bis 1,2 Gew.-% eines Nukleierungsmittels (F) in Bezug auf das Gesamtgewicht der heterophasischen Zusammensetzung umfasst.

**3.** Heterophasische Polypropylenzusammensetzung nach Anspruch 2, wobei das Nukleierungsmittel (F) Talk und/oder mindestens ein Vinylcycloalkanpolymer ist.

**4.** Heterophasische Polypropylenzusammensetzung nach einem der vorhergehenden Ansprüche, wobei der Gehalt der Zusatzstoffe (E) unter 1,0 Gew.-% liegt und vorzugsweise 0,1 bis 8,0 Gew.-% und am meisten bevorzugt 0,2 bis 0,7 Gew.-% in Bezug auf das Gesamtgewicht der heterophasischen Zusammensetzung beträgt.

**5.** Heterophasische Polypropylenzusammensetzung nach einem der vorhergehenden Ansprüche, wobei die XCS-Fraktion einen Gehalt an Monomereinheiten, die sich von Ethylen ableiten, von 25 bis 55, besonders vorzugsweise von 30 bis 50 und am meisten bevorzugt von 35 bis 45 Gew.-% aufweist.

**6.** Heterophasische Polypropylenzusammensetzung nach einem der vorhergehenden Ansprüche, wobei die XCS-Fraktion eine intrinsische Viskosität von 3,5 bis 6,0, besonders vorzugsweise von 4,0 bis 5,8 und am meisten bevorzugt von 4,4 bis 5,5 dl/g aufweist, gemessen in Decalin bei 135 °C gemäß DIN EN ISO 1628-1 und -3.

**7.** Heterophasische Polypropylenzusammensetzung nach einem der vorhergehenden Ansprüche, wobei die heterophasische Polypropylenzusammensetzung einen Biegemodul von mehr als 1500 MPa, vorzugsweise von mehr als 1625 MPa, noch mehr bevorzugt von mehr als 1650 MPa und am meisten bevorzugt von mehr als 1700 MPa aufweist, bestimmt gemäß ISO 178.

**8.** Heterophasische Polypropylenzusammensetzung nach einem der vorhergehenden Ansprüche, wobei die heterophasische Polypropylenzusammensetzung einen Gehalt an Monomereinheiten, die sich von Ethylen ableiten, von 3,0 bis 6,5 und vorzugsweise von 4,0 bis 5,5 Gew.-% aufweist.

**9.** Heterophasische Polypropylenzusammensetzung nach einem der vorhergehenden Ansprüche, wobei die heterophasische Polypropylenzusammensetzung eine Schmelzwärme, $H_M$, von 85 bis 125, vorzugsweise von 90 bis 120 und besonders vorzugsweise von 95 bis 116 J/g aufweist, gemessen mittels Differenzialrasterkalorimetrie (DSC) gemäß ISO 11357-1, -2 und -3.

**10.** Heterophasische Polypropylenzusammensetzung nach einem der vorhergehenden Ansprüche, wobei die heterophasische Polypropylenzusammensetzung eine Kristallisationswärme, $H_C$, von 80 bis 120, vorzugsweise von 85 bis 115 und besonders vorzugsweise von 19 bis 111 J/g aufweist, gemessen mittels Differenzialrasterkalorimetrie (DSC) gemäß ISO 11357-1, -2 und -3.

**11.** Heterophasische Polypropylenzusammensetzung nach einem der vorhergehenden Ansprüche, wobei die heterophasische Polypropylenzusammensetzung eine Kristallisationstemperatur, $T_C$, von 118 bis 135, vorzugsweise von 128 bis 132 und besonders vorzugsweise von 129 bis 131 °C aufweist, gemessen gemäß ISO 11357-1, -2 und -3.

**12.** Heterophasische Polypropylenzusammensetzung nach einem der vorhergehenden Ansprüche, wobei die heterophasische Polypropylenzusammensetzung einen Polydispersitätsindex, *PI,* gemessen bei 200 °C, von 2,5 bis 6,0, vorzugsweise von 2,8 bis 5,0 und besonders vorzugsweise von 3,0 bis 4,2 $Pa^{-1}$ aufweist.

**13.** Gefüllte heterophasische Polypropylenzusammensetzung, bestehend aus der Polypropylenzusammensetzung nach einem der Ansprüche 1 bis 12 und einem anorganischen Mineralfüllstoff (C) mit einer Menge von 5 bis 55 Gew.-%, vorzugsweise 15 bis 45 Gew.-% und am meisten bevorzugt 20 bis 40 Gew.-% in Bezug auf das Gesamtgewicht der gefüllten heterophasischen Polypropylenzusammensetzung.

**14.** Gefüllte heterophasische Polypropylenzusammensetzung nach Anspruch 13, wobei der anorganische Mineralfüllstoff (C) Talk ist.

**15.** Gefüllte heterophasische Polypropylenzusammensetzung nach Anspruch 13 oder 14, wobei das gefüllte heterophasische Polypropylen einen Biegemodul von mehr als 2500 MPa aufweist, bestimmt gemäß ISO 178.

**16.** Verfahren zum Herstellen der heterophasischen Polypropylenzusammensetzung nach einem der vorhergehenden Ansprüche in Gegenwart von einem katalytischen Ziegler-Natta-System, das mit Vinylcyclohexan modifiziert ist und einen Cokatalysator umfasst, wobei das Verfahren das Folgende umfasst:

a) Herstellen von einem ersten Material in einer ersten Polymerisationsstufe (I), das einen $MFR_2$ (2,16 kg, 230 °C) von 0,5 bis 8 g/10 min aufweist, und das ferner einen XCS-Gehalt von 0,5 bis 2 Gew.-% aufweist,
wobei die erste Polymerisationsstufe (I) einen Slurry-Reaktor umfasst und das Verfahren bei einer Temperatur von 70 bis 95 °C und einem Druck von 50 bis 60 barg gefahren wird;
b) Überführen von dem ersten Material in eine zweite Polymerisationsstufe (II);
c) ferner Herstellen von einem zweiten Material,
wobei die zweite Polymerisationsstufe (II) einen Gasphasenreaktor umfasst und das Verfahren bei einer Temperatur von 80 bis 95 °C und einem Druck von 20 bis 35 barg gefahren wird;
d) Überführen von der Mischung aus erstem und zweitem Material, die eine $MFR_2$ von 6 bis 8 g/10 min aufweist, in eine dritte Polymerisationsstufe (III),
wobei die dritte Polymerisationsstufe (III) einen Gasphasenreaktor umfasst und das Verfahren bei einer Temperatur von 60 bis 90 °C und einem Druck von 14 bis 22 barg gefahren wird;
e) optionales Compoundieren von dem Reaktionsprodukt der dritten Polymerisationsstufe (III) mit Zusatzstoff(en), optional Nukleierungsmittel(n), optional Modifikator(en) und/oder optional anorganischem(n) mineralischem(n) Füllstoff(en).

**17.** Artikel, umfassend die heterophasische Polypropylenzusammensetzung nach einem der Ansprüche 1 bis 12 oder die gefüllte heterophasische Polypropylenzusammensetzung nach einem der Ansprüche 13 bis 15.

**18.** Artikel nach Anspruch 17, wobei der Artikel ein extrudiertes oder spritzgegossenes Rohr, ein Anschlussstück, ein Schacht oder ein Teil von einem Regenwassermanagementsystem ist.

## Revendications

**1.** Composition de polypropylène hétérophasique comprenant
une phase de matrice d'homopolymère ou de copolymère aléatoire de propylène (A), et
une phase de caoutchouc de copolymère d'éthylène-propylène (B) dispersée dans la phase de matrice,
la composition de polypropylène hétérophasique comprenant
une fraction soluble dans le p-xylène à 25 °C (fraction XCS) qui est présente dans la résine en une quantité de 4 à

14 % en poids, et
une fraction insoluble dans le p-xylène à 25 °C (fraction XCU) qui est présente dans la résine en une quantité de 86 à 96 % en poids,
dans laquelle la composition de polypropylène hétérophasique présente un $MFR_2$, déterminé selon la norme ISO 1133 à 230 °C et sous une charge de 2,16 kg, de 4,0 à 8,0 g/10 min ; et
dans laquelle la composition de polypropylène hétérophasique présente un module d'élasticité en flexion supérieur à 1 500 MPa mesuré sur une éprouvette moulée par injection de dimension 80 x 10 x 4 $mm^3$ selon la norme ISO 178 ; et
dans laquelle la composition de polypropylène hétérophasique présente une teneur en motifs monomères dérivés de l'éthylène de 2,0 à 7,0 % en poids.

**2.** Composition de polypropylène hétérophasique selon la revendication 1, dans laquelle la composition comprend facultativement de 50 ppm à 1,5 % en poids, plus préférablement de 100 ppm à 1,3 % en poids, et de manière préférée entre toutes de 0,1 à 1,2 % en poids d'un agent de nucléation (F) par rapport au poids total de la composition hétérophasique.

**3.** Composition de polypropylène hétérophasique selon la revendication 2, dans laquelle l'agent de nucléation (F) est du talc et/ou au moins un polymère de vinylcycloalcane.

**4.** Composition de polypropylène hétérophasique selon l'une quelconque des revendications précédentes, dans laquelle la teneur en additifs (E) est inférieure à 1,0 % en poids, de préférence de 0,1 à 0,8 % en poids, et de manière préférée entre toutes de 0,2 à 0,7 % en poids par rapport au poids total de la composition hétérophasique.

**5.** Composition de polypropylène hétérophasique selon l'une quelconque des revendications précédentes, dans laquelle la fraction XCS présente une teneur en motifs monomères dérivés de l'éthylène de 25 à 55, plus préférablement de 30 à 50, et de manière préférée entre toutes de 35 à 45 % en poids.

**6.** Composition de polypropylène hétérophasique selon l'une quelconque des revendications précédentes dans laquelle la fraction XCS présente une viscosité intrinsèque de 3,5 à 6,0, plus préférablement de 4,0 à 5.8, et de manière préférée entre toutes de 4,4 à 5,5 dl/g mesurée dans la décaline à 135 °C selon la norme DIN EN ISO 1628-1 et-3.

**7.** Composition de polypropylène hétérophasique selon l'une quelconque des revendications précédentes dans laquelle la composition de polypropylène hétérophasique présente un module d'élasticité en flexion supérieur à 1 500 MPa, de préférence supérieur à 1 625 MPa, encore plus préférablement supérieur à 1 650 MPa, et de manière préférée entre toutes supérieur à 1 700 MPa, déterminé selon la norme ISO 178.

**8.** Composition de polypropylène hétérophasique selon l'une quelconque des revendications précédentes, dans laquelle la composition de polypropylène hétérophasique présente une teneur en motifs monomères dérivés de l'éthylène de 3,0 à 6,5, et de préférence de 4,0 à 5,5 % en poids.

**9.** Composition de polypropylène hétérophasique selon l'une quelconque des revendications précédentes dans laquelle la composition de polypropylène hétérophasique présente une chaleur de fusion, $H_M$, de 85 à 125, de préférence de 90 à 120, et plus préférablement de 95 à 116 J/g mesurée par analyse calorimétrique à compensation de puissance (CCP) selon la norme ISO 11357-1, -2, et -3.

**10.** Composition de polypropylène hétérophasique selon l'une quelconque des revendications précédentes dans laquelle la composition de polypropylène hétérophasique présente une chaleur de cristallisation, $H_C$, de 80 à 120, de préférence de 85 à 115, et plus préférablement de 90 à 111 J/g mesurée par analyse calorimétrique à compensation de puissance (CCP) selon la norme ISO 11357-1, -2, et -3.

**11.** Composition de polypropylène hétérophasique selon l'une quelconque des revendications précédentes dans laquelle la composition de polypropylène hétérophasique présente une température de cristallisation, $T_C$, de 118 à 135, de préférence de 128 à 132, et plus préférablement de 129 à 131 °C mesurée selon la norme ISO 11357-1, -2 et -3.

**12.** Composition de polypropylène hétérophasique selon l'une quelconque des revendications précédentes dans laquelle la composition de polypropylène hétérophasique présente un indice de polydispersité, *PI,* mesuré à 200 °C, de 2,5 à 6,0, de préférence de 2,8 à 5,0, et plus préférablement de 3,0 à 4,2 $Pa^{-1}$.

**13.** Composition de polypropylène hétérophasique chargé constituée de la composition de polypropylène selon l'une quelconque des revendications 1 à 12 et d'une charge inorganique minérale (C) en une quantité de 5 à 55 % en poids, de préférence de 15 à 45 % en poids, et de manière préférée entre toutes de 20 à 40 % en poids par rapport au poids total de la composition de polypropylène hétérophasique chargé.

**14.** Composition de polypropylène hétérophasique chargé selon la revendication 13, dans laquelle la charge inorganique minérale (C) est du talc.

**15.** Composition de polypropylène hétérophasique chargé selon les revendications 13 ou 14, dans laquelle le polypropylène hétérophasique chargé présente un module d'élasticité en flexion supérieur à 2 500 MPa, déterminé selon la norme ISO 178.

**16.** Procédé de production de la composition de polypropylène hétérophasique selon l'une quelconque des revendications précédentes en présence d'un système catalytique Ziegler-Natta modifié par du vinylcyclohexane comprenant un cocatalyseur, dans lequel le procédé comprend

a) la production d'un premier matériau dans une première étape de polymérisation (I), présentant un $MFR_2$ (2,16 kg, 230 °C) de 0,5 à 8 g/10 min, présentant en outre une teneur en XCS de 0,5 à 2 % en poids,
dans lequel la première étape de polymérisation (I) comprend un réacteur en suspension et le procédé est mis en oeuvre à une température de 70 à 95 °C et une pression de 50 à 60 barg ;
b. le transfert dudit premier matériau dans une seconde étape de polymérisation (II) ;
c. en outre la production d'un second matériau,
la seconde étape de polymérisation (II) comprenant un réacteur en phase gazeuse et le procédé étant mis en oeuvre à une température de 80 à 95 °C et une pression de 20 à 35 barg ;
d. le transfert du mélange desdits premier et second matériaux présentant un $MFR_2$ de 6 à 8 g/10 min dans une troisième étape de polymérisation (III),
la troisième étape de polymérisation (III) comprenant un réacteur en phase gazeuse et le procédé étant mis en oeuvre à une température de 60 à 90 °C et une pression de 14 à 22 barg ;
e. facultativement le mélangeage du produit réactionnel de la troisième étape de polymérisation (III) avec un (des) additif(s), facultativement un (des) agent(s) de nucléation, facultativement un (des) modificateur(s) et/ou facultativement une (des) charge(s) inorganique(s) minérale(s).

**17.** Article comprenant la composition de polypropylène hétérophasique selon l'une quelconque des revendications 1 à 12 ou la composition de polypropylène hétérophasique chargé selon l'une quelconque des revendications 13 à 15.

**18.** Article selon la revendication 17, l'article étant un tuyau extrudé ou moulé par injection, un raccord, un trou d'homme, ou une pièce d'un système de gestion des eaux pluviales.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1619217 A1
- EP 2072576 A1
- EP 0991719 A
- WO 2011117103 A1
- WO 9924479 A
- EP 1028985 A
- EP 1632529 A
- EP 0491566 A1
- EP 0591224 A1
- FI 86866
- FI 96615
- FI 88047
- FI 88048
- WO 8707620 A
- WO 9221705 A
- WO 9311165 A
- WO 9311166 A
- WO 9319100 A
- WO 9736939 A
- WO 9812234 A
- WO 9933842 A
- WO 9219653 A
- WO 9219658 A
- WO 92119653 A
- FI 963707
- WO 9219659 A
- US 4347160 A
- US 4382019 A
- US 4435550 A
- US 4465782 A
- US 4473660 A
- US 4530912 A
- US 4560671 A
- EP 0887379 A
- WO 9212182 A
- WO 9858975 A
- WO 2004000899 A
- WO 2004111095 A
- WO 9924478 A
- WO 0068315 A
- EP 0491566 A
- EP 1724303 A1


### Non-patent literature cited in the description


- **HEINO, E.L. ; LEHTINEN, A. ; TANNER J. ; SEPPÄLÄ, J. ; NESTE OY ; PORVOO ; FINLAND.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY ; PORVOO ; FINLAND.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754